(19) Europäisches Patentamt / European Patent Office / Office européen des brevets

(11) **EP 3 615 486 B1**

(12) **FASCICULE DE BREVET EUROPEEN**

(45) Date de publication et mention de la délivrance du brevet:
**08.06.2022 Bulletin 2022/23**

(21) Numéro de dépôt: **18724965.1**

(22) Date de dépôt: **24.04.2018**

(51) Classification Internationale des Brevets (IPC):
*C03C 17/22* (2006.01)    *C03C 17/32* (2006.01)
*C03C 17/42* (2006.01)

(52) Classification Coopérative des Brevets (CPC):
**C03C 17/32; C03C 17/225; C03C 17/42;**
C03C 2217/485

(86) Numéro de dépôt international:
**PCT/FR2018/051024**

(87) Numéro de publication internationale:
**WO 2018/197802 (01.11.2018 Gazette 2018/44)**

(54) **ARTICLE DÉSTINÉ Á ÊTRE TREMPÉ PROTÉGÉ PAR UNE COUCHE TEMPORAIRE**

VON EINER TEMPORÄREN SCHICHT GESCHÜTZTER ARTIKEL FÜR TEMPERN

ARTICLE INTENDED TO BE TEMPERED THAT IS PROTECTED BY A TEMPORARY LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2017 FR 1753770**

(43) Date de publication de la demande:
**04.03.2020 Bulletin 2020/10**

(73) Titulaire: **SAINT-GOBAIN GLASS FRANCE**
**92400 Courbevoie (FR)**

(72) Inventeurs:
• **HEURTEFEU, Bertrand**
  **93290 Tremblay-En-France (FR)**
• **LOHOU, Stéphane**
  **75019 Paris (FR)**
• **GUILLEMOT, François**
  **75019 Paris (FR)**

(74) Mandataire: **Saint-Gobain Recherche Département Propriété Industrielle 39 Quai Lucien Lefranc 93300 Aubervilliers (FR)**

(56) Documents cités:
**WO-A1-2015/019022    WO-A1-2015/185848**

EP 3 615 486 B1

**Description**

L'invention concerne des articles comprenant un substrat de verre revêtu d'un revêtement fonctionnel protégé destinés à être trempés thermiquement. L'invention concerne plus particulièrement l'optimisation de ces articles en vue d'améliorer les conditions de trempe thermique et réaliser ainsi des économies notables d'énergie.

La trempe thermique consiste à porter un substrat de verre à une température proche de son point de ramollissement (de 570 à 700 °C, en fonction de sa composition) et à le refroidir rapidement. Ce procédé crée des contraintes de tension et de compression conférant au substrat de verre des propriétés mécaniques supérieures en termes de résistance aux chocs. Lorsqu'un verre trempé thermiquement se casse, il éclate en de nombreux petits morceaux.

Un substrat de verre comprenant un revêtement fonctionnel réfléchissant les infra-rouges est plus difficile à tremper qu'un substrat de verre sans revêtement fonctionnel ou substrat de verre « nu ». Le revêtement fonctionnel réfléchit les infra-rouges au détriment du chauffage du substrat de verre. L'énergie qui devrait être absorbée par le substrat et permettre son échauffement est réfléchit par le revêtement fonctionnel. Par conséquent, il est nécessaire d'augmenter la convection de la chaleur dans les fours de trempe pour tremper un substrat de verre comprenant un revêtement fonctionnel réfléchissant les infra-rouges.

Les revêtements fonctionnels peuvent être classiquement déposés par pulvérisation cathodique. Le procédé de dépôt industriel consiste à faire défiler les substrats sur une ligne de fabrication continue comprenant une ou plusieurs enceintes de dépôt sous vide.

Le demandeur a développé une couche de protection temporaire organique spécifiquement utilisée pour protéger des substrats de verre destinés à être tremper thermiquement. Cette couche de protection est qualifiée de « temporaire » car elle est éliminée lors de la trempe par décomposition thermique. Ces couches de protection temporaires sont décrites dans la demande WO 2015/019022.

La formulation de la couche de protection temporaire a été optimisée de façon à pouvoir être déposée et réticulée grâce des moyens adaptés directement intégrable en sortie de l'enceinte de dépôt du revêtement fonctionnel. Cela permet de prévenir toute contamination des substrats revêtus et de fabriquer en continu des articles protégés.

Pour parvenir à ce résultat, la couche de protection temporaire doit notamment présenter :

- une viscosité adaptée pour être déposée avec l'épaisseur requise à une vitesse compatible avec les vitesses de défilement du substrat sur la ligne de fabrication,
- une vitesse de réticulation également compatible avec les vitesses de défilement du substrat sur la ligne de fabrication.

La formulation de la couche temporaire est également adaptée pour être totalement éliminée suite au traitement thermique sans nuire aux propriétés optiques du substrat portant le revêtement fonctionnel.

Les couches de protection temporaire décrites dans la demande WO 2015/019022 ont pour objectif de protéger les articles des rayures. Ces couches temporaires ne sont pas utilisées dans le but d'optimiser les conditions de trempe afin de faire notamment des gains d'énergie. Les temps et températures de traitement thermique sont simplement choisis afin de parfaitement « bruler » la couche de protection temporaire.

Pour faire des économies d'énergie, à une température de trempe fixée, on cherche à abaisser la durée de l'étape de traitement thermique à température élevée. A cette fin, on détermine les temps de trempe minimaux permettant d'obtenir les propriétés requises, à savoir :

- l'obtention de vitrage de bonne qualité : absence de casse, d'iridescence, de corrosion du revêtement fonctionnel, planéité,
- la fragmentation,
- l'élimination de la couche de protection temporaire.

L'obtention des propriétés requises est vérifiée par des tests de fragmentation lors desquels les articles de verre sont cassés. Des fragments sont obtenus. La taille, le nombre la plus longue dimension des fragments et l'aspect des bords, rendent compte de la qualité de la trempe.

Lorsque l'élimination de la couche de protection temporaire est totale, on observe :

- aucun résidu suite à la trempe, l'article est parfaitement propre,
- quelques résidus présents mais ces résidus sont facilement enlevés par un simple essuyage l'aide d'un chiffon.

On considère que l'élimination de la couche de protection temporaire n'est pas satisfaisante lorsque l'on observe des résidus suite au traitement thermique qui ne peuvent pas être enlevés par essuyage à l'aide d'un chiffon.

Le demandeur a découvert de manière surprenante que ces couches de protection temporaires permettent de diminuer la durée pendant laquelle le substrat est porté à température élevée pendant la trempe. Cette durée de traitement à température élevée est appelée dans la suite du texte « temps de trempe».

Un gain est obtenu lorsque l'on compare les temps de trempe minimaux :

- d'un article comprenant un substrat de verre revêtu d'un revêtement fonctionnel protégé par une couche de protection temporaire (Article E) et
- d'un article comprenant un substrat de verre revêtu d'un revêtement fonctionnel (Article F).

Or, rien n'indiquait qu'un tel gain pouvait être obtenu. La demande WO 2015/019022 ne comporte aucune indication montrant que l'utilisation d'une telle couche de protection temporaire permettrait de diminuer les temps et/ou les températures de traitement thermique de type trempe. Seules des expérimentations en vue d'optimiser les conditions de trempe ont permis de mettre en évidence un effet bénéfique spécifiquement attribuable à la couche de protection temporaire.

Fort de la découverte de cet avantage surprenant, le demandeur a cherché à développer une couche de protection temporaire organique ayant pour fonction supplémentaire de permettre de diminuer les conditions de trempes, c'est-à-dire la température ou le temps pendant lequel le substrat de verre est porté à température élevée.

A cette fin, l'invention concerne un article comprenant un substrat de verre comprenant deux faces principales définissant deux surfaces principales séparées par des bords, ledit substrat portant :

- un revêtement fonctionnel déposé sur au moins une partie d'une surface principale et
- une couche de protection temporaire déposée sur au moins une partie du revêtement fonctionnel présentant une épaisseur d'au moins 1 micromètre,

caractérisé en ce que la couche de protection temporaire comprend une matrice polymérique organique et des matériaux absorbants les infra-rouges.

L'invention concerne également un procédé d'obtention d'un article traité à température élevée. L'article comprend un substrat de verre comprenant deux faces principales définissant deux surfaces principales séparées par des bords, ledit substrat en verre portant un revêtement fonctionnel déposé sur au moins une partie d'une surface principale. Le procédé comprend les étapes suivantes :

une étape de protection de l'article comprenant :

- préparer une composition polymérisable comprenant des matériaux absorbants les infra-rouges,
- appliquer la composition sur au moins une partie du revêtement fonctionnel sur une épaisseur d'au moins 1 micromètre,
- réticuler la composition de façon à former la couche de protection temporaire,

une même étape de traitement thermique et de déprotection de l'article comprenant :

- éliminer la couche de protection temporaire par traitement thermique à température supérieure à 200 °C et suffisante pour réaliser la trempe de l'article.

Le procédé de l'invention permet de diminuer les conditions de trempe, c'est-à-dire la température ou le temps pendant lequel l'article est porté à température élevée.

Le demandeur a découvert que l'utilisation d'une couche de protection temporaire organique comprenant des matériaux absorbants les infra-rouges permet de diminuer significativement les temps ou les températures de trempe. La couche de protection temporaire absorbe les rayonnements infra-rouges, notamment ceux pouvant être réfléchis par le revêtement fonctionnel, et réémet de l'énergie sous forme de chaleur à proximité immédiate du substrat de verre. La couche de protection temporaire contribue ainsi à augmenter l'énergie finale apportée au substrat de verre grâce à des phénomènes d'absorption, de création d'énergie et de transfert de l'énergie absorbée et/ou créée.

Enfin, la présence des matériaux absorbants ne nuit pas aux bonnes propriétés d'élimination de la couche de protection temporaire.

La couche de protection temporaire est obtenue à partir d'une composition polymérisable. Les matériaux absorbants peuvent être ajoutés en proportions suffisantes pour avoir l'effet significatif recherché, directement dans la composition polymérisable, sans modifier ses propriétés essentielles, à savoir :

- sa viscosité contribuant au dépôt des épaisseurs requises à une vitesse compatible avec les exigences industrielles,
- sa vitesse de réticulation/séchage devant également être compatible avec les exigences industrielle.

Les matériaux absorbant les infrarouges absorbent dans le domaine de longueur d'ondes supérieur à 800 nm, de préférence compris entre 800 et 5000 nm notamment autour de 3000 nm. Cette valeur correspond au pic du spectre de rayonnement du corps noir aux températures de trempe.

Toutes les caractéristiques lumineuses présentées dans la présente description sont obtenues selon les principes et méthodes décrits dans la norme européenne EN 410 se rapportant à la détermination des caractéristiques lumineuses et solaires des vitrages utilisés dans le verre pour la construction.

La transmittance et la réflexion sont mesurées à différentes longueurs d'ondes comprises entre 800 et 2000 nm avec un Lambda 900 de Perkin Elmer.

La transmittance de l'article protégé selon l'invention mesurée à une longueur d'onde comprise entre 800 et 2000 nm est par ordre préférence croissant, inférieure à 80 %, inférieure à 70 %, inférieure à 60 %, inférieure à 50 %, inférieur à 40 %, inférieure à 30 %, inférieure à 20 %, inférieure à 10 %.

La présence d'une couche de protection temporaire comprenant des matériaux absorbant les IR induit une variation de la transmittance ou de la réflexion dans l'infrarouge de l'article comprenant un revêtement fonctionnel et une telle couche de protection par rapport au même article sans couche de protection. L'impact de la couche de protection sur la variation de la transmittance ou de la réflexion dépend des propriétés du revêtement fonctionnel.

En effet, si le revêtement fonctionnel à pour propriétés une transmittance faible et une réflexion élevée dans l'infra-rouge, la présence de la couche de protection absorbant les IR modifiera de manière conséquente la réflexion de l'article et non la transmittance.

En revanche, si le revêtement fonctionnel à pour propriétés une transmittance plus élevée et une réflexion plus faible dans l'infra-rouge, la présence de la couche de protection absorbant les IR peut modifier de manière plus conséquente la transmittance de l'article.

Par conséquent, la couche de protection temporaire induit :

- une variation de la transmittance, mesurée à une longueur d'onde comprise entre 800 et 2000 nm, par ordre de préférence croissant, supérieure à 20 %, supérieure à 30 %, supérieure à 40 % supérieure à 50 %, supérieure à 60 %, supérieure à 65 %,

ou

- une variation de la réflexion, mesurée à une longueur d'onde comprise entre 800 et 2000 nm, par ordre de préférence croissant, supérieure à 20 %, supérieure à 30 %, supérieure à 40 % supérieure à 50 %, supérieure à 60 %, supérieure à 65 %.

La variation est obtenue en mesurant respectivement la transmittance ou la réflexion à une longueur d'onde comprise entre 800 et 2000 nm d'un article ne comprenant pas de couche de protection temporaire (T.réf ou R.réf) et d'un même article comprenant la couche temporaire (T.pro ou R.pro) puis en réalisant les calculs suivants : $\Delta T = |$ T.réf - T.pro $|$ et $\Delta R = |$ R.réf - R.pro $|$.

Le matériau absorbant les infra-rouges peut être choisi parmi les pigments et colorants. Ces matériaux absorbants doivent de préférence résister à des températures supérieures à 300°C, de préférence supérieures à 400°C et mieux supérieures à 500°C, c'est-à-dire qu'ils ne doivent pas être dégradés à ces températures. Les matériaux absorbants les infrarouges présentent une température de début de perte de masse, par ordre de préférence croissant, supérieure à 300 °C, supérieure à 400 °C, supérieure à 500 °C. De préférence la température de perte de masse est inférieure à 700°C. Cette température de perte de masse peut être mesurée par Analyse Thermo Gravimétrique (ATG).

Le pigment peut être choisi dans le groupe formé des pigments de noir de carbone, des pigments de noir d'aniline, des pigments de noir d'oxyde de fer, des pigments de noir d'oxyde de titane.

Les matériaux absorbants les infrarouges peuvent être sous forme de particules dont la taille ne dépasse pas l'épaisseur de la couche de protection temporaire.

Selon l'invention, la taille moyenne des particules est mesurée par diffusion dynamique de la lumière (« Dynamic light scattering », DLS), selon la méthode d'analyse des cumulants décrite dans la norme ISO 22412:2017.

Le rapport de l'épaisseur de la couche de protection temporaire sur la taille moyenne de particules de matériaux absorbants est, par ordre de préférence croissant :

- supérieur à 3, supérieur à 5, supérieur à 10, supérieur à 15, supérieur 20, supérieur à 25, et/ou
- inférieur à 300, inférieur à 200, inférieur à 150 inférieur à 100, inférieur à 80, inférieur à 60, inférieur à 50, inférieur à 40.

Le choix spécifique de ce rapport permet d'obtenir une couche de protection temporaire conservant ses propriétés protectrices avantageuses. En effet, la taille de particules de matériaux absorbants est choisie en fonction de l'épaisseur de la couche pour :

- ne pas créer des ponts entre l'air ambiant et le revêtement fonctionnel et ainsi conserver les propriétés imperméabilisantes de la couche de protection temporaire,
- ne pas fragiliser la tenue mécanique de la couche de protection temporaire sur le revêtement fonctionnel,
- conserver l'excellente protection contre les rayures.

La taille moyenne des particules de matériaux absorbants est par ordre de préférence croissant :

- supérieure à 50 nm, supérieure à 100 nm, supérieure à 200 nm, supérieure à 300 nm, supérieure à 400 nm, supérieure à 500 nm,
- inférieure à 5 µm, inférieure à 2 µm, inférieure à 1 µm, inférieure à 900 nm, inférieure à 800 nm, inférieure à 700 nm.

Les proportions de matériaux absorbants peuvent être ajustées. Les matériaux absorbants représentent, par ordre de préférence croissant, 0,5 à 10 parties, 1,0 à 5,0 parties, 2,0 à 4,0 parties en masse pour 100 parties en masse de la matrice polymérique organique. Une couche de protection temporaire comprenant ces proportions de matériaux absorbants est facilement réticulée par polymérisation UV.

La solution de l'invention est peu couteuse et facile à mettre en œuvre. En effet, parmi les colorant et pigments absorbant les infra-rouges, certains présentent un faible coût. La présence des matériaux absorbants dans la composition polymérisable ne nécessite pas de solvant additionnel et ne nuit pas au durcissement de la couche de protection temporaire. Par conséquent, la solution de l'invention ne nécessite pas d'adapter le procédé de fabrication des articles protégés.

Dans la suite du texte, les modes de réalisation préférés s'appliquent de la même manière aux différents objets de l'invention, l'article et le procédé.

La couche de protection temporaire selon l'invention est spécifiquement destinée à être éliminée lors d'une trempe thermique à une température suffisante pour permettre son élimination par décomposition thermique sans nuire aux propriétés optiques, énergétiques ou thermiques du substrat portant le revêtement fonctionnel. Une seule et même étape de traitement thermique du substrat protégé permet d'éliminer la couche de protection du substrat et de conférer au substrat certaines propriétés ou conformation (substrat trempé et/ou bombé).

La couche de protection temporaire présente avantageusement une ou plusieurs des caractéristiques suivantes :

- elle a une épaisseur d'au moins 1 micromètre,
- elle est non soluble dans l'eau,
- elle est obtenue à partir d'une composition polymérisable comprenant des composés (méth)acrylates,
- elle est durcie par séchage, par cuisson IR, par irradiation UV ou par faisceau d'électrons.

La couche de protection temporaire comprend essentiellement des matériaux organiques de type polymère (méth)acrylate. Sa formulation chimique permet une combustion rapide et complète durant un traitement thermique et ne génère lors de sa décomposition que des molécules volatiles faciles à éliminer.

La couche de protection temporaire est obtenue à partir d'une composition polymérisable. La composition polymérisable comprend au moins des composés organiques polymérisables et au moins un matériau absorbant les infrarouges.

Les composés organiques polymérisables sont de préférence des composés (méth)acrylates choisis parmi des monomères, des oligomères, des prépolymères ou des polymères comprenant au moins une fonction (méth)acrylate.

L'application d'une couche de protection temporaire obtenue à partir d'une composition polymérisable liquide essentiellement exempte de solvant et durcie de préférence par irradiation UV, par cuisson IR ou par faisceau d'électrons est particulièrement avantageuse. Le choix de cette technologie sans solvant simplifie de manière considérable la mise en œuvre industrielle d'un procédé comprenant une étape d'application d'une telle couche. L'absence de solvant permet d'éviter la mise en place d'un dispositif de séchage, de récupération, de traitement des vapeurs de solvant qui ne doivent pas être émises dans l'atmosphère. Les modifications à apporter peuvent se limiter à insérer en fin de ligne un dispositif de dépôt par exemple par enduction au rouleau « roller coater » ainsi qu'un dispositif de réticulation tel qu'une lampe UV.

La couche de protection temporaire selon l'invention est de préférence appliquée en sortie de la ligne de fabrication des substrats portant des revêtements fonctionnels. L'étape de dépôt de la couche de protection temporaire peut être facilement intégrée dans le procédé de fabrication du substrat portant le revêtement fonctionnel.

La composition polymérisable présente, grâce au choix judicieux des composés (méth)acrylates, une viscosité adaptée pour permettre d'obtenir facilement une couche de protection temporaire d'épaisseur supérieure ou égale à 1 µm et une réactivité suffisante pour permettre une réticulation quasiment instantanée sur toute l'épaisseur. La nature chimique, le degré de réticulation, la densité ainsi que l'épaisseur de la couche de protection temporaire concourent à l'obtention d'une protection efficace contre l'abrasion, l'apparition de rayures et la corrosion. Ces propriétés de protection sont obtenues pour des épaisseurs inférieures à 50 micromètres.

Enfin, l'absence de solvant couplée au durcissement quasiment instantané par exemple par irradiation UV ou par faisceau d'électrons permet d'obtenir des substrats protégés sans incidence sur les cadences de fabrication. Avantageusement, les vitesses d'enduction sont compatibles avec les vitesses de dépôt des revêtements fonctionnels ce qui permet une fabrication continue des substrats portant un revêtement fonctionnel et une couche de protection temporaire selon l'invention. Par exemple, les vitesses d'application de la couche de protection temporaire, comprenant par exemple l'enduction et la réticulation, peuvent être comprises entre 1 et 90 m/min sur un substrat de largeur 1 m à 3,3 m.

Cette couche de protection temporaire non soluble dans l'eau permet d'obtenir une protection efficace lors de l'étape de lavage et contre la corrosion humide. La protection est conservée même lorsque le substrat subit des découpes successives. En effet, les substrats protégés selon l'invention semblent protégés des mécanismes de corrosion qui pourraient s'initier d'une part en pleine face mais également à partir du bord de découpe. Les substrats protégés selon l'invention peuvent donc être découpés plusieurs fois sans nécessiter de modifier la couche de protection et sans perdre les fonctions de protection mécanique et chimique.

Le revêtement fonctionnel est déposé par pulvérisation cathodique magnétron.

De préférence, le substrat protégé, c'est-à-dire le substrat portant la couche de protection temporaire n'a pas subi de traitement thermique de type trempe, recuit et/ou bombage, c'est-à-dire de traitement thermique à une température supérieure à 200 °C ou supérieure à 400 °C. Le substrat protégé n'est pas trempé et/ou bombé.

De préférence, le substrat portant le revêtement fonctionnel n'a pas subi de traitement thermique à température élevée de type trempe, recuit et/ou bombage, c'est-à-dire de traitement thermique à une température supérieure à 200 °C ou supérieure à 400 °C. Cela signifie que l'article formé par le substrat et le revêtement fonctionnel n'a pas subi de traitement thermique à température élevée. Cela signifie également que le procédé ne comporte pas d'étape de traitement thermique à température élevée, c'est-à-dire de traitement thermique à une température supérieure à 200 °C ou supérieure à 400 °C, entre le dépôt du revêtement fonctionnel et le dépôt de la couche de protection temporaire.

Bien que l'invention convienne tout particulièrement pour la protection de substrats portant des revêtements fonctionnels mécaniquement faibles, la solution de l'invention peut s'appliquer à la protection de substrats portant tous types de revêtement fonctionnel.

Le revêtement fonctionnel réfléchit les infra-rouges. Le revêtement fonctionnel comprend au moins une couche fonctionnelle.

La couche fonctionnelle est de préférence une couche pouvant agir sur le rayonnement solaire et/ou le rayonnement infrarouge de grande longueur d'onde. Ces couches fonctionnelles sont par exemple des couches fonctionnelles métalliques à base d'argent ou d'alliage métallique contenant de l'argent.

Le substrat peut comprendre un revêtement fonctionnel comprenant un empilement de couches minces comportant successivement à partir du substrat une alternance de n couches métalliques fonctionnelles, notamment de couches fonctionnelles à base d'argent ou d'alliage métallique contenant de l'argent, et de (n+1) revêtements antireflets, chaque revêtement antireflet comportant au moins une couche diélectrique, de manière à ce que chaque couche métallique fonctionnelle soit disposée entre deux revêtements antireflets. De préférence, n vaut 1, 2, 3 ou 4. De façon encore plus préférée, n est supérieur à 1 notamment n vaut 2 ou 3.

Le substrat peut comprendre un empilement de couches minces comportant successivement à partir du substrat une alternance de deux couches métalliques fonctionnelles, notamment de couches fonctionnelles à base d'argent ou d'alliage métallique contenant de l'argent, et de trois revêtements antireflets, chaque revêtement antireflet comportant au moins une couche diélectrique, de manière à ce que chaque couche métallique fonctionnelle soit disposée entre deux revêtements antireflets.

Le substrat peut également comprendre un empilement de couches minces comportant successivement à partir du substrat une alternance de trois couches métalliques fonctionnelles, notamment de couches fonctionnelles à base d'argent ou d'alliage métallique contenant de l'argent, et de quatre revêtements antireflets, chaque revêtement antireflet comportant au moins une couche diélectrique, de manière à ce que chaque couche métallique fonctionnelle soit disposée entre deux revêtements antireflets.

L'épaisseur du revêtement fonctionnel est :

- supérieure à 100 nm, de préférence supérieure à 150 nm,
- inférieure à 300 nm, de préférence inférieure à 250 nm.

Selon un mode de réalisation particulièrement avantageux de l'invention, le revêtement fonctionnel comprend une couche supérieure choisie parmi les nitrures, oxydes ou oxy-nitrures de titane et/ou de zirconium. La couche supérieure du revêtement fonctionnel est la couche la plus éloignée du substrat et/ou la couche en contact direct avec la couche de protection temporaire.

La couche supérieure peut en particulier être une couche :

- de nitrure de titane ; de nitrure de zirconium ; de nitrure d'hafnium ; de nitrure de titane et de zirconium ; de nitrure de titane, de zirconium et d'hafnium ;
- d'oxyde de titane ; d'oxyde de zirconium ; d'oxyde d'hafnium ; d'oxyde de titane et de zirconium ; d'oxyde de titane, de zirconium et d'hafnium.

L'épaisseur de ces couches supérieures est préférentiellement comprise entre 1 et 20 nm et mieux comprise entre 1 et 5 nm.

Selon une variante, la couche supérieure peut être une couche de nitrure de silicium éventuellement dopé à l'aluminium. L'épaisseur de cette couche supérieure est préférentiellement comprise entre 5 et 50 nm et mieux comprise entre 10 et 50 nm.

Le revêtement fonctionnel peut être déposé par tout moyen connu tel que par pulvérisation cathodique assistée par un champ magnétique, par évaporation thermique, par CVD ou PECVD, par pyrolyse, par dépôt par voie chimique, par voie de type sol-gel ou dépôt de couches inorganiques par voie humide.

Le revêtement fonctionnel est de préférence déposé par pulvérisation cathodique assistée par un champ magnétique. Selon ce mode de réalisation avantageux, toutes les couches du revêtement fonctionnel sont déposées par pulvérisation cathodique assistée par un champ magnétique. La couche de protection temporaire est avantageusement directement au contact du revêtement fonctionnel.

La couche de protection temporaire comprend une matrice polymérique. La matrice polymérique est essentiellement de nature organique. Cette matrice résulte de la réticulation des composés organiques polymérisables présents dans la composition polymérisable.

La matrice polymérique représente au moins 80 % en masse de la couche de protection temporaire.

La matrice polymérique est obtenue à partir d'une composition polymérisable comprenant des composés organiques polymérisables, de préférence des composés (méth)acrylates. Les composés (méth)acrylates ayant réagis rentre eux représentant au moins 80%, de préférence au moins 90%, voire 100% en masse de la matrice polymérique.

Par (méth)acrylate, on entend un acrylate ou un méthacrylate. On entend par « composés (méth)acrylate », les esters de l'acide acrylique ou méthacrylique comportant au moins une fonction acroyle ($CH_2$=CH-CO-) ou méthacroyle ($CH_2$=CH($CH_3$)-CO-). Ces esters peuvent être des monomères, des oligomères, des pré-polymères ou des polymères. Ces composés (méth)acrylate, lorsqu'ils sont soumis aux conditions de polymérisation, donnent un réseau polymère doté d'une structure solide.

Les composées (méth)acrylate utilisés selon l'invention peuvent être choisis parmi les (méth)acrylates monofonctionnels et polyfonctionnels tels que les (méth)acrylates mono-, di-, tri-, poly-fonctionnels. Des exemples de tels monomères sont :

- les (méth)acrylates monofonctionnels tels que le méthyl(méth)acrylate, éthyl(méth)acrylate, n- ou ter-butyl(méth)acrylate, hexyl(méth)acrylate, cyclohexyl(méth)acrylate, 2-éthylhexyl(méth)acrylate, benzyl(méth)acrylate, 2-éthoxyethyl(méth)acrylate, phenyloxyethyl(méth)acrylate, hydroxyethylacrylate, hydroxypropyl(méth)acrylate, vinyl(méth)acrylate caprolactone acrylate, isobornyl méthacrylate, lauryl methacrylate, polypropylène glycol monométhacrylate,
- les (méth)acrylates difonctionnels tels que 1,4-butanediol di(méth)acrylate, éthylène diméthacrylate, 1,6-hexandiol di(méth)acrylate, bisphénol A di(méth)acrylate, triméthylolpropane diacrylate, triéthylène glycol diacrylate, éthylène glycol di(méth)acrylate, polyéthylène glycol di(méth)acrylate, le tricyclodécane diméthanol diacrylate,
- les (méth)acrylates trifonctionnels tels que triméthylolpropane triméthacrylate, triméthylolpropane triacrylate, pentaérythritol triacrylate, trimethylolpropane triacrylate éthoxylé, trimethylolpropane triméthacrylate, tripropylène glycol triacrylate,
- les (méth)acrylate de fonctionnalité supérieure tels que pentaérythritol tétra(méth)acrylate, ditriméthylpropane tétra(méth)acrylate, dipentaérythritol penta(méth)acrylate ou hexa(méth)acrylate.

De préférence, la couche de protection temporaire ne comprend pas d'additifs non susceptibles d'être éliminés lors du traitement thermique tels que des composés organiques comprenant du silicium de type siloxanes.

La couche de protection temporaire présente une épaisseur :

- supérieure à 1 micromètre, de préférence supérieure à 5 micromètres, et/ou
- inférieure à 100 micromètres, de préférence inférieure à 50 micromètres, et/ou
- comprise entre 2 et 100 micromètres, entre 5 et 50 micromètres ou entre 10 et 30 micromètres.

La couche de protection temporaire présente un grammage compris entre 5 et 50 $g/m^2$, de préférence entre 10 et 30 $g/m^2$.

Selon des modes de réalisations avantageux de l'invention, la composition polymérisable présente une ou plusieurs caractéristiques suivantes :

- la composition polymérisable comprend moins de 20% en masse de solvant par rapport à la masse totale de la composition polymérisable,
- la composition polymérisable comprend moins de 10% en masse de solvant par rapport à la masse totale de la composition polymérisable,
- la composition polymérisable est sans solvant,
- la composition polymérisable est liquide,
- la composition polymérisable présente une viscosité mesurée à 25 °C :

  - d'au moins 0,05 Pa.s, d'au moins 0,08 Pa.s, d'au moins 0,1 Pa.s, d'au moins 0,50 Pa.s,
  - d'au plus 5 Pa.s, d'au plus 2 Pa.s,
  - comprise entre 0,05 et 5 Pa.s ;

- la composition polymérisable comprend au moins un initiateur de polymérisation, de préférence un photoinitiateur,
- l'initiateur de polymérisation représente 0,1 à 20 %, ou 1 à 15 %, de préférence 5 à 15% et mieux 8 à 12% en masse de la masse totale des composés organiques polymérisables, de préférence des composés (méth)acrylates,
- la composition polymérisable comprend en outre au moins un additif choisi parmi les plastifiants, les agents de séparation, des stabilisants à la chaleur et/ou à la lumière, des agents épaississants ou des modificateurs de surface,
- la somme de tous les additifs est comprise entre 0 et 5 % en masse de la masse de la composition polymérisable,
- les composés (méth)acrylates choisis parmi les esters de l'acide acrylique ou méthacrylique comportant au moins deux fonctions acroyle (CH2=CH-CO-) ou méthacroyle (CH2=CH(CH3)-CO-),
- la composition polymérisable comprend en masse par rapport à la masse totale des composés (méth)acrylates, par ordre de préférence croissant, au moins 50 %, au moins 60%, au moins 70%, au moins 80%, au moins 90%, 100% de composés (méth)acrylates choisis parmi les esters de l'acide acrylique ou méthacrylique comportant au moins deux fonctions acroyle (CH2=CH-CO-) ou méthacroyle (CH2=CH(CH3)-CO- ),
- la composition polymérisable comprend :

  - au moins un oligomère uréthane-acrylique aliphatique,
  - au moins un monomère (méth)acrylate choisi parmi les monomères (méth)acrylates mono, bi, tri-fonctionnel,
  - au moins un initiateur de polymérisation,

- la composition polymérisable comprend :

  - au moins un oligomère uréthane-acrylique aliphatique,
  - au moins un monomère (méth)acrylate difonctionnel,
  - au moins un monomère (méth)acrylate trifonctionnel,
  - au moins un initiateur de polymérisation, de préférence un photoinitiateur,

- la composition polymérisable comprend en masse par rapport à la masse totale des composés (méth)acrylates :

  - 30 à 80 % en masse d'au moins un oligomère uréthane-acrylique aliphatique,
  - 20 à 70 % en masse d'au moins au moins un monomère (méth)acrylate choisi parmi un (méth)acrylate mono, bi, tri fonctionnel.

Selon l'invention, les initiateurs de polymérisation et le ou les matériaux absorbants les infrarouges ne sont pas considérés comme des additifs notamment pour la détermination des proportions dans la composition polymérisable ou dans les couches de protection temporaire.

La composition polymérisable peut être appliquée à température ambiante par tout moyen connu et notamment par enduction au rouleau, par aspersion, par trempage, par enduction au rideau, ou par pistoletage. La composition polymérisable est préférentiellement appliquée par enduction au rouleau. La vitesse de dépôt de la composition polymérisable peut être comprise entre 1 et 90 m/min.

La couche de protection temporaire peut être durcie :

- par séchage à une température inférieure à 200°C pendant une durée allant par exemple de 10 s à 180 s,
- par réticulation UV (différentes longueurs d'onde) de préférence à l'air libre et à température ambiante ou
- par faisceau d'électron.

La composition polymérisable comprend en outre un initiateur de polymérisation dont la nature est fonction du type de durcissement choisi. Par exemple, en cas de durcissement thermique, on utilise des initiateurs de type peroxyde de benzoyle. En cas de durcissement par rayonnement UV, on utilise des initiateurs dits photoinitiateurs.

Le substrat à protéger doit supporter un traitement thermique de type trempe. L'invention concerne donc tout substrat susceptible d'être trempé. Le substrat est de préférence un substrat en verre.

Avantageusement, le substrat portant la couche de protection temporaire n'a pas subi de traitement thermique de type trempe, recuit et/ou bombage, c'est-à-dire de traitement thermique à une température supérieure à 200 °C.

Le substrat en verre peut être plat, incolore et/ou teinté. L'épaisseur du substrat est de préférence comprise entre 1 et 19 mm, plus particulièrement entre 2 et 10 mm, voire entre 3 et 6 mm.

Selon une variante de l'invention, la couche de protection temporaire peut servir à protéger le revêtement fonctionnel pendant une étape de dépôt d'un autre revêtement. Cet autre revêtement peut être déposé sur une partie de la surface principale du substrat portant le revêtement fonctionnel ou sur une partie de la surface principale du substrat ne portant pas le revêtement fonctionnel.

Il est notamment connu que pour l'obtention de substrats bi-fonctionnalisés portant un revêtement fonctionnel sur chaque face principale, le contact du revêtement fonctionnel déposé en premier avec les rouleaux du dispositif de dépôt durant le second passage permettant le dépôt du deuxième revêtement entraîne des altérations dommageables de la qualité du premier revêtement (pollution, rayures). Ces altérations devenant visibles après dépôt du deuxième revêtement fonctionnel et éventuellement trempe. L'invention permet de pallier ce problème en protégeant le premier revêtement par une couche de protection destinée à disparaitre durant la trempe ou le bombage du substrat bi-fonctionnalisé.

Selon une autre variante de l'invention, la couche de protection temporaire peut servir à protéger la surface arrière du substrat pendant le dépôt d'un revêtement fonctionnel. En effet, le passage sur les rouleaux de la face arrière d'un substrat, par exemple en verre, lors du dépôt d'un revêtement fonctionnel, est susceptible d'altérer partiellement la dite surface (salissure, rayure). L'invention permet de pallier ce problème en protégeant la surface arrière du substrat avant dépôt du premier revêtement.

La couche de protection temporaire peut être déposée :

- sur chacune des surfaces principales du substrat, et/ou
- sur au moins un bord du substrat, et/ou
- sur chacun des bords du substrat.

Lorsque la couche de protection temporaire est déposée sur chacune des surfaces principales du substrat et sur chacun des bords du substrat, la protection chimique et/ou mécanique est alors conférée sur l'entière surface du substrat.

La couche de protection temporaire peut être déposée sur un substrat en verre avant ou après une étape de découpe, c'est-à-dire sur un substrat en verre à la taille finale ou proche de la taille finale (primitif).

L'invention a encore pour objet le procédé d'obtention d'un article comprenant un substrat. La température de traitement thermique est supérieure à 200 °C, supérieure à 300 °C, ou supérieure à 400 °C. Les traitements thermiques sont choisis parmi un une trempe et/ou un bombage.

Le traitement thermique nécessaire pour éliminer la couche de protection peut être un recuit dans un four statique ou dynamique. Le traitement thermique peut alors avoir pour objectif d'améliorer la cristallisation d'une ou plusieurs couches incluses dans l'empilement à protéger.

Le revêtement fonctionnel comprend au moins une couche fonctionnelle déposée lors d'une étape de dépôt par magnétron.

La couche de protection temporaire est formée immédiatement après l'étape de dépôt du revêtement fonctionnel. Selon l'invention, on considère que la couche de protection temporaire peut être formée « immédiatement après », lorsque la couche de protection temporaire peut être formée moins de 10 minutes, de préférence moins de 5 minutes et mieux moins de 1 minutes après l'étape de dépôt du revêtement fonctionnel.

Les articles protégés selon l'invention peut être empilés sans pollution croisée, ni apparition de rayures mécaniques, immédiatement après dépôt des revêtements fonctionnels.

**Exemples**

**1. Substrats revêtus du revêtement fonctionnel**

Les substrats utilisés sont des substrats en verre plan d'environ 6 mm d'épaisseur obtenus par un procédé de flottage (" float ").

Les revêtements fonctionnels comprennent un empilement de couches minces déposées grâce à un dispositif de pulvérisation cathodique assisté par champ magnétique (magnétron).

L'empilement de couches minces comporte successivement à partir du substrat une alternance de trois revêtements diélectriques et de deux couches d'argent (couches métalliques fonctionnelles), chaque revêtement diélectrique comportant au moins une couche diélectrique, de manière à ce que chaque couche métallique fonctionnelle soit disposée entre deux revêtements diélectriques. La couche du revêtement fonctionnel la plus éloignée du substrat est une couche de nitrure de titane et de zirconium de 1 à 5 nm. L'épaisseur totale de ce revêtement fonctionnel est comprise entre 150 et 200 nm.

## 2. Préparation des compositions polymérisables

Les compositions polymérisables ont été préparées. Ces compositions comprennent des composés organiques polymérisables, des initiateurs de polymérisation et éventuellement des additifs et des matériaux absorbants les infrarouges.

Les composés organiques polymérisables comprennent les oligomères, monomères et éventuellement prépolymères. Un mélange d'oligomères et de monomères comprenant au moins une fonction acrylate commercialisés par la société Sartomer a été utilisé avec notamment :

- CN9276 : oligomère uréthane-acrylate aliphatique tétra-fonctionnel,
- SR351 : triméthylolpropane triacrylate, monomère acrylate tri-fonctionnel,
- SR833S : tricyclodécane diméthanol diacrylate, monomère acrylate di-fonctionnel.

La présence de l'oligomère uréthane-acrylate permet de moduler les propriétés de dureté et de souplesse de la couche de protection temporaire.

L'initiateur de polymérisation utilisé dans ces exemples est l'Irgacure® 184, commercialisés par BASF.

Le matériau absorbant les infrarouges testé est du noir de carbone vendu sous la dénomination Monarch 120 par la société CABOT. La taille moyenne des particules mesurée selon la norme ISO 22412:2017 par l'analyse en cumulant est comprise entre 500 et 750 nm. Le noir de carbone a une température de début de perte de masse mesurée par ATG supérieure à 500°C et inférieure à 650°C.

Les différents constituants et additifs sont mélangés par ultrason.

Les compositions testées sont définies dans tableau ci-dessous en parties en masse.

| Compositions | E | C1 | X2 | B3 | A4 |
|---|---|---|---|---|---|
| Matrice polymérique : | | | | | |
| - oligomère acrylate | 60 | 60 | 60 | 60 | 60 |
| - di-fonctionnel acrylate | 20 | 20 | 20 | 20 | 20 |
| - tri-fonctionnel acrylate | 20 | 20 | 20 | 20 | 20 |
| Initiateur UV | + 10 | + 10 | + 10 | + 10 | + 10 |
| Noir de carbone | 0 | 1 | 2 | 3 | 4 |

## 3. Préparation des articles testés

| Articles | V | C1' | X2' | B3' | A4' |
|---|---|---|---|---|---|
| Substrat sans revêtement fonctionnel | Oui | Oui | Oui | Oui | Oui |
| Composition polymérisée | Non | C1 | X2 | B3 | A4 |

| Articles | F | E | C1 | X2 | B3 | A4 |
|---|---|---|---|---|---|---|
| Substrat + Revêtement fonctionnel | Oui | Oui | Oui | Oui | Oui | Oui |
| Composition polymérisée | Non | E | C1 | X2 | B3 | A4 |

Les compositions polymérisables sont appliquées sur les substrats en verre revêtu du revêtement fonctionnel par enduction au rouleau (meyer). Le rouleau applicateur tourne à une vitesse comprise entre environ 15 et 25 m/min. Les épaisseurs de compositions polymérisables déposées sont comprises entre 10 et 20 $\mu$m.

Les couches de protection temporaires sont obtenues par réticulation par un rayonnement UV fourni par une lampe à mercure de puissance 120 W. Pendant cette étape l'article défile à une vitesse de 15 m/min. L'épaisseur de la couche de protection temporaire obtenue dans ces conditions est de 10 à 20 $\mu$m.

Toutes les compositions testées réticulent de manière satisfaisante. Dans la mesure où ces compositions polymérisables ne comportent pas de solvant, les quantités de matériaux absorbants les infra-rouges dans la composition polymérisable sont sensiblement égales aux quantités de matériaux absorbant dans la couche de protection temporaire.

La matrice polymérique est obtenue par réticulation des composés organiques polymérisables. La proportion des composés polymérisables dans la composition polymérisable est sensiblement égale à la proportion de matrice polymérique dans la couche de protection temporaire.

Ces exemples montrent qu'une couche de protection temporaire comprenant jusqu'à 4 parties en masse de matériaux absorbants pour 100 parties en masse de matrice polymérique présente une épaisseur dans la gamme requise. Elle peut être appliquée et réticulée à des vitesses de défilement compatibles avec les vitesses de défilement utilisées dans les procédés de dépôts industriels par pulvérisation magnétron, par exemple un procédé de dépôt de revêtements fonctionnels en ligne continu.

### 4. Essais de trempe

Des essais de trempe utilisant un four vertical ont été réalisés. Le four vertical permet de simuler en laboratoire les conditions de trempe. Le verre est maintenu verticalement, grâce à un système de pinces, sur un support mobile. Ce support s'insère automatiquement dans le four situé au-dessus à la température demandée. Une fois le temps de trempe écoulé, le support redescend et le verre est soumis à un jet d'air froid sur ses deux faces à l'aide d'un système de buses. Le four est sans convection et la température régulée à l'aide de 3 thermocouples situés à 3 emplacements distincts. Les paramètres suivants sont fixés :

- Température du four : 730 °C,
- Temps de trempe : Variable,
- Temps de refroidissement : 100 s,
- Pression d'air froid : 0,7 bar.

Pour chaque article, les temps les plus courts de trempe ont été déterminés. On vérifie que la trempe est satisfaisante par des essais de rupture.

### a. Détermination des temps minimaux de trempe

Les temps de trempe minimaux permettant d'obtenir les propriétés requises ont été déterminés. Ces temps correspondent aux temps minimaux pour :

- obtenir un vitrage de bonne qualité avec notamment absence de casse, absence d'iridescence, absence de corrosion du revêtement fonctionnel, bonne planéité,
- obtenir un vitrage présentant une fragmentation satisfaisante et
- éliminer la couche de protection temporaire.

Les gains en temps sont calculés de la façon suivante :

$$G = \frac{|\text{Tps de trempe de l'article à définir} - \text{Tps de Trempe Article F}| \times 100}{\text{Temps de trempe article F}}$$

| Art. | Tps trempe | Gain | Elimination de la couche | Frag. |
|------|-----------|------|--------------------------|-------|
| **V** | 109 s | - | - | Ok |
| **F** | 190s | - | - | Ok |
| **E** | 150 s | - | Résidus noir visible après essuyage (fig.1) | Ok |
| **C1** | 120 s | > 35 % | Poudre noire éliminée par essuyage | Ok |
| **X2** | 100 s | > 45 % | Poudre noire éliminée par essuyage | Ok |
| **B3** | 100 s | > 45 % | Poudre noire éliminée par essuyage | Ok |
| **A4** | 90 s | > 55 % | Poudre noire éliminée par essuyage | Ok |
| Frag. : Fragmentation | | | | |

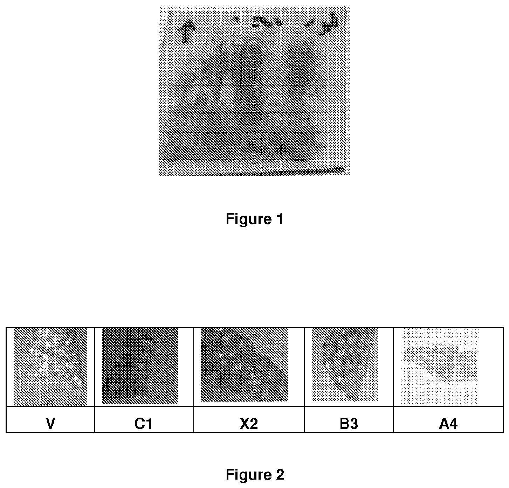

La figure 1 montre un article comprenant un revêtement fonctionnel protégé par une couche de protection temporaire telle que décrite dans la demande WO 2015/019022. Cet article a subi un traitement thermique pendant une durée supérieure à 150 s. On observe des résidus noir correspondant à une partie de la couche de protection temporaire non brulée. Ces résidus ne peuvent pas être enlevés par essuyage.

Pour les articles selon l'invention dont l'étape de traitement thermique à température élevée est plus courte, seuls quelques résidus sont présents mais peuvent être enlevés par essuyage.

**b. Détermination de la qualité de la trempe**

La qualité de la trempe a été testée par fragmentation. Les articles sont cassés. La figure 2 représente des photographies des articles V, C1, X2, B3 et A4 ayant subi le test de fragmentation. On constate que pour chaque article la fragmentation est satisfaisante. Cela se traduit par l'observation :

- du nombre de fragments,
- de la dimension maximale des fragments et
- de l'aspect des bords.

**5. Propriétés d'absorption des couches de protection temporaires**

Des mesures de transmittance et de réflexion ont été réalisées à différentes longueurs d'ondes sur différents articles.

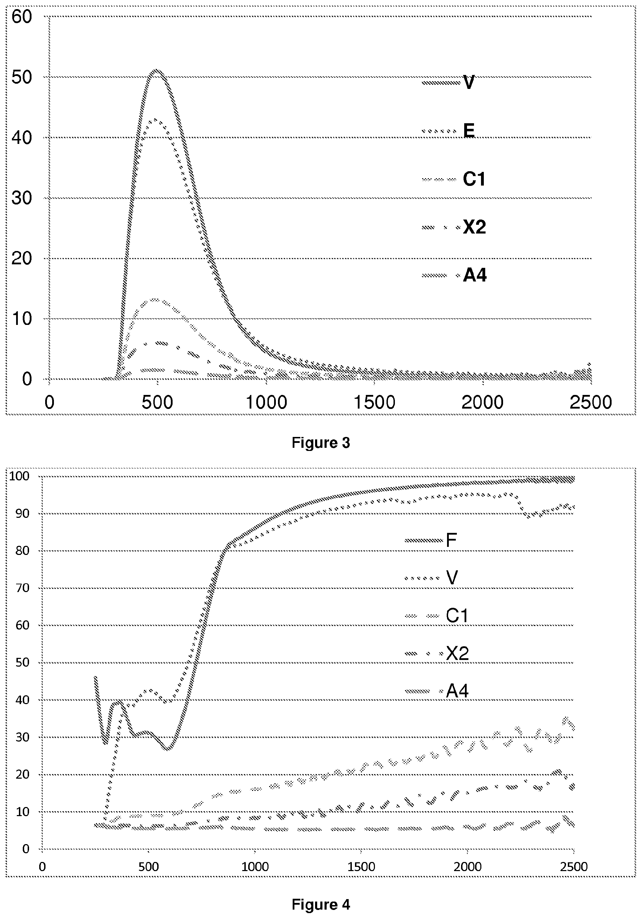

La figure 3 représente un graphique illustrant la transmittance en fonction des longueurs d'ondes pour les articles V, F, C1, X2 et A4.

La figure 4 représente un graphique illustrant la réflexion en fonction des longueurs d'ondes pour les articles V, F, C1, X2 et A4.

| Article | Transmittance (T) et Réflexion (R) | | | | | | | | | |
|---------|---------|---|---------|---|---------|---|---------|---|---------|---|
| | 800 nm | | 1250 nm | | 1500 nm | | 1750 nm | | 2000 nm | |
| | T | R | T | R | T | R | T | R | T | R |
| **V** | 86% | - | 84% | - | 86% | - | 88% | - | 87% | - |
| **C1'** | 36% | - | 38% | - | 42% | - | 45% | - | 47% | - |
| **X2'** | 18% | - | 21% | - | 24% | - | 26% | - | 28% | - |
| **A4'** | 5% | - | 7% | - | 8% | - | 10% | - | 11% | - |

(suite)

| Article | Transmittance (T) et Réflexion (R) | | | | | | | | | |
|---------|---------|---|---------|---|---------|---|---------|---|---------|---|
| | 800 nm | | 1250 nm | | 1500 nm | | 1750 nm | | 2000 nm | |
| | T | R | T | R | T | R | T | R | T | R |
| F | 14% | 69% | 2% | 93% | 1% | 96% | 0,6% | 97% | 0,3% | 98% |
| E | 14% | 72% | 2% | 90% | 1% | 93% | 1% | 93% | 0,8% | 95% |
| C1 | 4% | 14% | 1% | 19% | 0,5% | 21% | 0,3% | 25% | 0,3% | 26% |
| X2 | 2% | 8% | 0,5% | 10% | 0,3% | 12% | 0,2% | 12% | 0,2% | 15% |
| A4 | 1% | 6% | 0,1% | 5% | 0,1% | 5% | 0,1% | 6% | 0,1% | 6% |

On calcul les variations de transmittance ou de réflexion induite par la couche de protection temporaire, $\Delta T$ = | T.réf - T.pro | et $\Delta R$ = | R.réf- R.pro | , avec :

T.réf et R.réf, transmittance ou réflexion à une longueur d'onde comprise entre 800 et 2000 nm d'un article ne comprenant pas de couche de protection temporaire et

T.pro et R.pro, transmittance ou réflexion d'un même article comprenant la couche temporaire.

La variation de la transmittance dans l'infrarouge induite par la couche de protection temporaire a été calculée en prenant comme référence :
- l'article V pour les articles C1', X2' et A4',
- l'article F pour les articles E, C1, X2 et A4.

| | $\Delta T$ à 800 nm | $\Delta T$ 2000 nm | $\Delta R$ à 800 nm | $\Delta R$ à 2000 nm |
|-----|-----|-----|-----|-----|
| C1' | 50% | 40% | - | - |
| X2' | 68% | 59% | - | - |
| A4' | 81 % | 76% | - | - |
| E | 0% | 0,5% | 3% | 3% |
| C1 | 10 % | 0% | 55 % | 72% |
| B3 | 12% | 0,1% | 61 % | 83% |
| A4 | 13% | 0,2% | 63% | 92% |

La présence de la couche de protection temporaire comprenant des matériaux absorbants les infra-rouges induit une variation de la transmittance supérieure à 20 % ou une variation de la réflexion supérieure à 20 % à une longueur d'onde donnée comprise entre 800 et 2000 nm.

## Revendications

1.   Article comprenant un substrat de verre comprenant deux faces principales définissant deux surfaces principales séparées par des bords, ledit substrat portant :

- un revêtement fonctionnel déposé sur au moins une partie d'une surface principale et
- une couche de protection temporaire déposée sur au moins une partie du revêtement fonctionnel présentant une épaisseur d'au moins 1 micromètre,

**caractérisé en ce que** la couche de protection temporaire comprend une matrice polymérique organique et des matériaux absorbants les infra-rouges.

2.   Article selon la revendication 1 **caractérisé en ce que** les matériaux absorbants les infra-rouges représentent 0,5 à 10 parties en masse pour 100 parties en masse de la matrice polymérique organique.

3. Article selon l'une quelconque des revendications précédentes **caractérisé en ce que** la couche de protection temporaire induit :

   - une variation de la transmittance, mesurée à une longueur d'onde comprise entre 800 et 2000 nm, supérieure à 20 %, ou
   - une variation de la réflexion, mesurée à une longueur d'onde comprise entre 800 et 2000 nm, supérieure à 20 %.

4. Article selon l'une quelconque des revendications précédentes **caractérisé en ce que** les matériaux absorbants les infrarouges présentent une température de début de perte de masse supérieure à 300 °C.

5. Article selon l'une quelconque des revendications précédentes **caractérisé en ce que** le rapport de l'épaisseur de la couche de protection temporaire sur la taille moyenne des particules de matériaux absorbants est supérieur à 3.

6. Article selon l'une quelconque des revendications précédentes **caractérisé en ce que** les matériaux absorbants les infra-rouges sont choisis parmi les pigments choisis parmi le noir de carbone, les pigments de noir d'aniline, les pigments de noir d'oxyde de fer, les pigments de noir d'oxyde de titane.

7. Article selon l'une quelconque des revendications précédentes **caractérisé en ce que** la matrice polymérique représente au moins 80 % en masse de la couche de protection temporaire.

8. Article selon l'une quelconque des revendications précédentes **caractérisé en ce que** la matrice polymérique est obtenue à partir d'une composition polymérisable comprenant des composés (méth)acrylates.

9. Article selon l'une quelconque des revendications précédentes **caractérisé en ce que** la matrice polymérique comprend des composés (méth)acrylates ayant réagis rentre eux représentant au moins 80 % en masse de la matrice polymérique.

10. Article selon l'une quelconque des revendications précédentes **caractérisé en ce que** la couche de protection temporaire est non soluble dans l'eau.

11. Article selon l'une quelconque des revendications précédentes **caractérisé en ce que** la couche de protection temporaire présente une épaisseur comprise entre 10 et 50 micromètres.

12. Article selon l'une quelconque des revendications précédentes **caractérisé en ce que** le substrat portant le revêtement fonctionnel n'a pas subi de traitement thermique à une température supérieure à 400 °C.

13. Article comprenant un substrat selon l'une quelconque des revendications précédentes **caractérisé en ce que** le revêtement fonctionnel comprend un empilement de couches minces comportant successivement à partir du substrat une alternance de n couches métalliques fonctionnelles à base d'argent ou d'alliage métallique contenant de l'argent, et de (n+1) revêtements antireflets, chaque revêtement antireflet comportant au moins une couche diélectrique, de manière à ce que chaque couche métallique fonctionnelle soit disposée entre deux revêtements antireflets.

14. Procédé d'obtention d'un article traité à température élevée, l'article comprenant un substrat de verre comprenant deux faces principales définissant deux surfaces principales séparées par des bords, ledit substrat en verre portant un revêtement fonctionnel déposé sur au moins une partie d'une surface principale, ledit procédé comprenant les étapes suivantes :

   une étape de protection de l'article comprenant :

   - préparer une composition polymérisable comprenant des matériaux absorbants les infra-rouges,
   - appliquer la composition sur au moins une partie du revêtement fonctionnel sur une épaisseur d'au moins 1 micromètre,
   - réticuler la composition de façon à former la couche de protection temporaire,

   une même étape de traitement thermique et de déprotection de l'article comprenant :

- éliminer la couche de protection temporaire par traitement thermique à une température supérieure à 200 °C et suffisante pour réaliser la trempe de l'article.

**15.** Procédé d'obtention d'un article selon la revendication 14 **caractérisé en ce que** le revêtement fonctionnel est déposé par pulvérisation cathodique assistée par un champ magnétique et **en ce que** la couche de protection temporaire est directement au contact du revêtement fonctionnel.

**16.** Procédé de protection d'un article selon l'une quelconque des revendications 14 à 15 **caractérisé en ce que** :

- la couche de protection temporaire est réticulée par réticulation UV,
- la composition polymérisable est appliquée par enduction au rouleau.

**Patentansprüche**

**1.** Artikel, umfassend ein Glassubstrat mit zwei Hauptseiten, die zwei durch Kanten getrennte Hauptoberflächen definieren, wobei das Substrat Folgendes trägt:

- eine Funktionsbeschichtung, die auf mindestens einem Teil einer Hauptoberfläche aufgebracht ist, und
- eine temporäre Schutzschicht, die auf mindestens einem Teil der Funktionsbeschichtung aufgebracht ist und eine Dicke von mindestens 1 Mikrometer aufweist,

**dadurch gekennzeichnet, dass** die temporäre Schutzschicht eine organische Polymermatrix und infrarotabsorbierende Materialien umfasst.

**2.** Artikel nach Anspruch 1, **dadurch gekennzeichnet, dass** die infrarotabsorbierenden Materialien 0,5 bis 10 Gewichtsteile pro 100 Gewichtsteile der organischen Polymermatrix ausmachen.

**3.** Artikel nach einem der vorstehenden Ansprüche, **dadurch gekennzeichnet, dass** die temporäre Schutzschicht Folgendes induziert:

- eine Änderung der Transmission, gemessen bei einer Wellenlänge zwischen 800 und 2.000 nm, von mehr als 20 %, oder
- eine Änderung der Reflexion, gemessen bei einer Wellenlänge zwischen 800 und 2.000 nm, von mehr als 20 %.

**4.** Artikel nach einem der vorhergehenden Ansprüche, **dadurch gekennzeichnet, dass** die infrarotabsorbierenden Materialien eine Anfangstemperatur des Masseverlusts von mehr als 300 °C aufweisen.

**5.** Artikel nach einem der vorhergehenden Ansprüche, **dadurch gekennzeichnet, dass** das Verhältnis der Dicke der temporären Schutzschicht zur durchschnittlichen Partikelgröße der absorbierenden Materialien größer als 3 ist.

**6.** Artikel nach einem der vorhergehenden Ansprüche, **dadurch gekennzeichnet, dass** die infrarotabsorbierenden Materialien aus Pigmenten ausgewählt sind, die aus Ruß, Anilinschwarzpigmenten, Eisenoxidschwarzpigmenten und Titanoxidschwarzpigmenten ausgewählt sind.

**7.** Artikel nach einem der vorhergehenden Ansprüche, **dadurch gekennzeichnet, dass** die Polymermatrix mindestens 80 Gew.-% der temporären Schutzschicht ausmacht.

**8.** Artikel nach einem der vorhergehenden Ansprüche, **dadurch gekennzeichnet, dass** die Polymermatrix aus einer polymerisierbaren Zusammensetzung erhalten wird, die (Meth)acrylatverbindungen enthält.

**9.** Artikel nach einem der vorhergehenden Ansprüche, **dadurch gekennzeichnet, dass** die Polymermatrix untereinander umgesetzte (Meth)acrylatverbindungen umfasst, die mindestens 80 Gew.-% der Polymermatrix ausmachen.

**10.** Material nach einem der vorstehenden Ansprüche, **dadurch gekennzeichnet, dass** die temporäre Schutzschicht nicht wasserlöslich ist.

**11.** Artikel nach einem der vorstehenden Ansprüche, **dadurch gekennzeichnet, dass** die temporäre Schutzschicht eine Dicke im Bereich zwischen 10 und 50 Mikrometern aufweist.

12. Artikel nach einem der vorstehenden Ansprüche, **dadurch gekennzeichnet, dass** das die Funktionsbeschichtung tragende Substrat keiner Wärmebehandlung bei einer Temperatur von über 400 °C unterzogen wurde.

13. Artikel, umfassend ein Substrat nach einem der vorhergehenden Ansprüche, **dadurch gekennzeichnet, dass** die Funktionsbeschichtung einen Dünnschichtstapel umfasst, der ausgehend vom Substrat aufeinanderfolgend eine Abfolge von n Funktionsmetallschichten auf der Basis von Silber oder einer silberhaltigen Metalllegierung und (n+1) Antireflexbeschichtungen umfasst, wobei jede Antireflexbeschichtung mindestens eine dielektrische Schicht umfasst, wobei jede Funktionsmetallschicht zwischen zwei Antireflexbeschichtungen angeordnet ist.

14. Verfahren zum Erhalten eines bei erhöhter Temperatur behandelten Artikels, wobei der Artikel ein Glassubstrat mit zwei Hauptflächen umfasst, die zwei durch Kanten getrennte Hauptoberflächen definieren, wobei das Glassubstrat eine Funktionsbeschichtung trägt, die auf mindestens einem Teil einer Hauptoberfläche abgeschieden ist, wobei das Verfahren die folgenden Schritte umfasst: einen Schritt zum Schützen des Artikels, umfassend:

   - Herstellen einer polymerisierbaren Zusammensetzung, die infrarotabsorbierende Materialien enthält,
   - Aufbringen der Zusammensetzung auf mindestens einen Teil der Funktionsbeschichtung in einer Dicke von mindestens 1 Mikrometer,
   - Vernetzen der Zusammensetzung, um die temporäre Schutzschicht zu bilden, wobei ein und derselbe Schritt der Wärmebehandlung und der Entschützung des Artikels Folgendes umfasst:
   - Entfernen der vorübergehenden Schutzschicht durch Wärmebehandlung bei einer Temperatur von über 200 °C, die ausreicht, um das Tempern des Artikels zu bewirken.

15. Verfahren zum Erhalten eines Artikels nach Anspruch 14, **dadurch gekennzeichnet, dass** die Funktionsbeschichtung durch magnetfeldunterstütztes Sputtern aufgebracht wird und **dass** die temporäre Schutzschicht direkt mit der Funktionsbeschichtung in Kontakt steht.

16. Verfahren zum Schutz eines Artikels nach einem der Ansprüche 14 bis 15, **dadurch gekennzeichnet, dass:**

   - die temporäre Schutzschicht durch UV-Vernetzung vernetzt wird,
   - die polymerisierbare Zusammensetzung durch Walzenbeschichtung aufgetragen wird.

**Claims**

1. An article comprising a glass substrate comprising two main faces defining two main surfaces separated by edges, said substrate bearing:

   - a functional coating deposited on at least one portion of a main surface and
   - a temporary protective layer deposited on at least one portion of the functional coating having a thickness of at least 1 micrometer,

   **characterized in that** the temporary protective layer comprises an organic polymer matrix and infrared-absorbing materials.

2. The article as claimed in claim 1, **characterized in that** the infrared-absorbing materials represent 0.5 to 10 parts by weight per 100 parts by weight of the organic polymer matrix.

3. The article as claimed in either one of the preceding claims, **characterized in that** the temporary protective layer leads to:

   - a variation in the transmittance, measured at a wavelength of between 800 and 2000 nm, of greater than 20%, or
   - a variation in the reflection, measured at a wavelength of between 800 and 2000 nm, of greater than 20%.

4. The article as claimed in any one of the preceding claims, **characterized in that** the infrared-absorbing materials have a weight loss onset temperature above 300°C.

5. The article as claimed in any one of the preceding claims, **characterized in that** the ratio of the thickness of the temporary protective layer to the mean size of the particles of absorbent materials is greater than 3.

6. The article as claimed in any one of the preceding claims, **characterized in that** the infrared-absorbing materials are chosen from the pigments chosen from carbon black, aniline black pigments, iron oxide black pigments, titanium oxide black pigments.

7. The article as claimed in any one of the preceding claims, **characterized in that** the polymer matrix represents at least 80% by weight of the temporary protective layer.

8. The article as claimed in any one of the preceding claims, **characterized in that** the polymer matrix is obtained from a polymerizable composition comprising (meth)acrylate compounds.

9. The article as claimed in any one of the preceding claims, **characterized in that** the polymer matrix comprises (meth)acrylate compounds that have reacted together representing at least 80% by weight of the polymer matrix.

10. The article as claimed in any one of the preceding claims, **characterized in that** the temporary protective layer is not soluble in water.

11. The article as claimed in any one of the preceding claims, **characterized in that** the temporary protective layer has a thickness between 10 and 50 micrometers.

12. The article as claimed in any one of the preceding claims, **characterized in that** the substrate bearing the functional coating has not undergone heat treatment at a temperature above 400°C.

13. The article comprising a substrate as claimed in any one of the preceding claims, **characterized in that** the functional coating comprises a stack of thin layers successively comprising, starting from the substrate, an alternation of n functional metallic layers based on silver or on a metal alloy containing silver, and of (n+1) antireflection coatings, each antireflection coating comprising at least one dielectric layer, so that each functional metallic layer is positioned between two antireflection coatings.

14. A process for obtaining an article treated at high temperature, the article comprising a glass substrate comprising two main faces defining two main surfaces separated by edges, said glass substrate bearing a functional coating deposited on at least one portion of a main surface, said process comprising the following steps:

    a step of protecting the article comprising:

    - preparing a polymerizable composition comprising infrared-absorbing materials,
    - applying the composition on at least one portion of the functional coating over a thickness of at least 1 micrometer,
    - crosslinking the composition so as to form the temporary protective layer,

    a same step of heat treating and deprotecting the article comprising:

    - removing the temporary protective layer by heat treatment at a temperature above 200°C and sufficient to achieve the tempering of the article.

15. The process for obtaining an article as claimed in claim 13, **characterized in that** the functional coating is deposited by magnetron sputtering and **in that** the temporary protective layer is directly in contact with the functional coating.

16. The process for protecting an article as claimed in either one of claims 13 and 15, **characterized in that**:

    - the temporary protective layer is crosslinked by UV crosslinking,
    - the polymerizable composition is applied by roller coating.

Figure 1

| V | C1 | X2 | B3 | A4 |

Figure 2

Figure 3

Figure 4

EP 3 615 486 B1

## RÉFÉRENCES CITÉES DANS LA DESCRIPTION

**Documents brevets cités dans la description**

- WO 2015019022 A